# EUROPEAN PATENT APPLICATION

(11) **EP 4 675 902 A1**
(43) Date of publication of application: **07.01.2026**
(21) Application number: 24185678.0
(22) Date of filing: 01.07.2024
(51) Int. Cl.: H02M 1/00, H02M 1/15, H02M 7/219, H02M 7/23, C25B 1/04, H02M 7/49

(54) **SUPPLYING AN ELECTROLYZING DEVICE WITH ELECTRIC ENERGY BY AT LEAST TWO POWER CONVERTERS**

(71) Applicant: Siemens Energy Global GmbH & Co. KG, 81739 München (DE)
(72) Inventor: Craciun, Bogdan, 91052 Erlangen (DE); Loku, Fisnik, 90439 Nürnberg (DE); Langenberg, Nils, 90461 Nürnberg (DE); Schumann, Sven, 91452 Wilhermsdorf (DE); Bendig, Marvin, 90513 Zirndorf (DE)

(57) **Abstract**

The invention relates to a method of controlling at least two power converters (12), wherein each of the power converters operates in self-commutation and has a DC side (18) and an AC side (16), wherein the AC sides (18) of the power converters (12) are connected with an AC power source (20), wherein the DC sides (16) of the at least two power converters (12) are connected in parallel with each other and with an electrolyzing device (14), wherein each of the power converters (12) are operated at a respective clock frequency, wherein commutation of each of the power converters (12) depends on the clock frequency of the respective one of the power converters (12). According to the invention, a value of a phase difference between at least two of the clock frequencies of the at least two power converters (12) is controlled to conform to a predetermined reference value.

## Description

The invention relates to a method of controlling at least two power converters, wherein each of the at least two power converters operates in self-commutation and has a DC side and an AC side, wherein the AC sides of the at least two power converters are connected with at least one AC power source, wherein the DC sides of the at least two power converters are connected in parallel with each other and are connected with an electrolyzing device, in order to supply the electrolyzing device with electric energy such that the electrolyzing device is subjected to an electrolyzing voltage and an electrolyzing current, wherein each of the at least two power converters are operated at a respective clock frequency, wherein commutation of each of the at least two power converters depends on the clock frequency of the respective one of the at least two power converters. Moreover, the invention relates to a control apparatus for controlling at least two power converters, wherein each of the at least two power converters is configured to operate in self-commutation and has a DC side and an AC side, wherein the AC sides of the at least two power converters are configured to be connected with at least one AC power source, wherein the DC sides of the at least two power converters are connected in parallel with each other and are connected with at least one electrolyzing device, in order to supply the at least one electrolyzing device with electric energy such that the at least one electrolyzing device is subjected to an electrolyzing voltage and an electrolyzing current, wherein each of the at least two power converters is configured to operate at a respective clock frequency, wherein commutation of each of the at least two power converters depends on the clock frequency of the respective one of the at least two power converters, the control apparatus comprising: a communication apparatus configured to communicate with the at least two power converters, a control section configured to gather data related to an operation of the at least two power converters and to determine at least one control signal for controlling the operation of the at least two power converters, wherein the control apparatus is configured to submit the at least one control signal to the at least two power converters. Finally, the invention relates to an electrolyzing plant having at least one electrolyzing device, at least two power converters, wherein each of the at least two power converters is configured to operate in self-commutation and has a DC side and an AC side, wherein the AC sides of the at least two power converters are configured to be connected with at least one AC power source, wherein the DC sides of the at least two power converters are connected in parallel with each other and are connected with the at least one electrolyzing device, in order to supply the at least one electrolyzing device with electric energy such that the at least one electrolyzing device is subjected to an electrolyzing voltage and an electrolyzing current, wherein each of the at least two power converters configured to operate at a respective clock frequency, wherein commutation of each of the at least two power converters depends on the clock frequency of the respective one of the at least two power converters, and a control apparatus which is communicatively connected with the at least two power converters.

Methods for controlling at least two power converters, respective apparatuses as well as electrolyzing plants, for instance, for producing hydrogen and oxygen by electrolyzing of water in an electrolyzing process, are well-known in the state of the art, which is why specific documents as a reference need not to be cited. The before-mentioned objects relate to providing an electrolyzing process which is used for producing hydrogen and oxygen by electrolyzing of water. The following considerations can be also applied to other such electrolyzing processes, respectively.

Electrolysis itself is provided by an electrolyzing device of the electrolyzing plant, which, in turn, comprises usually plural electrolyzing cells. A group of the electrolyzing cells of a specific electrolyzing device may be arranged to form an electrolyzing module. One or more electrolyzing modules may form the electrolyzing device.

The electrolyzing cells of a specific electrolyzing device or a specific electrolyzing module, respectively, may be electrically connected at least partially in series or in parallel. An electric connection of the electrolyzing device may be provided such that at least some, or perhaps all, of the electrolyzing cells are subjected to a respective portion of a DC voltage, namely the electrolyzing voltage, subjected to the electrolyzing device. The operation of generic electrolyzing cells as well as electrolyzing devices, for instance, for the use for electrolyzing of water, are well-known to those skilled in the art, such as, for instance, disclosed by DE 197 29 529 C1. The generic function of electrolysis, especially electrolysis of water, is also well-known to those skilled in the art which is why it is refrained from further detailed explanation in this specification. During the determined electrolyzing process, the electrolyzing device responds with a respective current, namely, the electrolyzing current.

An electrolyzing device has at least one single electrolyzing cell. However, common designs of electrolyzing devices teach that a specific electrolyzing device has a plurality of electrolyzing cells. With regard to the electrolyzing of water, during the electrolyzing process, water is consumed, and hydrogen and oxygen are produced. A value of the DC voltage usually may depend on the number of electrolyzing cells being connected in series inside of the electrolyzing device. The electrolyzing DC current flow may depend on the number of electrolyzing cells being connected in parallel as well as the specific design of each of the electrolyzing cells.

The electrolyzing plant has at least one electrolyzing device. Usually, the electrolyzing plant has plural electrolyzing devices which may electrically be connected in at least in parallel or in series. The electrolyzing plant consumes a respective high power during the electrolyzing process. The conditions for establishing the electrolyzing process are not easy to control which is why it is usually an intention of operators to maintain specific processing conditions and to avoid large amendments of these conditions. Therefore, controlling of the electric power network should consider these requirements for supplying the electrolyzing plant with electric energy, on the one hand. On the other hand, network requirements of the electric power network need to be also considered, such as, for example, harmonics, power factor, low voltage condition, high voltage condition, and/or the like.

In this regard, it should be noted that the electrolyzing plant usually has a rectifying device providing an electrical coupling between the electric power network and the electrolyzing device. The electrolyzing device needs to be supplied with DC voltage, whereas, usually, the electric power network provides AC voltage, usually, a three phase AC voltage. Therefore, the electrolyzing plant has at least one rectifying device which receives the AC voltage and, in response, provides the DC voltage. Moreover, the rectifying device may include one or more transformers, in order to transform the AC voltage before rectifying.

For the purpose of rectifying as such, the rectifying device may have only thyristors or diodes, respectively. If thyristors are provided, they can be controlled in order to adjust a specific electric power to be supplied to the electrolyzing device. More progressive rectifying devices comprise one or more power converters which operate in a self-commutation modus. Preferably, the power converters are transistor-based and are configured to operate with a clock frequency much higher than a basic frequency of the AC power source. Power converters operating in the self-commutation modus usually entail a ripple value of a voltage ripple or ripple current, respectively, on the DC side which is superimposed to the DC voltage or DC current, respectively. The ripple value may be substantially caused by the clock-frequency-controlled commutation of the respective power converter. Especially, a parallel operation of such power converters may result in high ripple values of the voltage ripple or the current ripple, respectively.

It should be further noted that the voltage ripple or the current ripple, respectively, is usually undesired because voltage ripple or the current ripple, respectively, may affect operation of the electrolyzing cells of the electrolyzing device. Especially, it was found that aging and/or integrity electrolyzing cells of the electrolyzing cells may be substantially affected. Therefore, there is a need of reducing the voltage ripple or the current ripple, respectively, when supplying an electrolyzing plant with electric energy.

Usually, a specific electrolyzing device may require a high DC current, for instance, in a range of about some one-digit kA through about some multi-digit kA. This clarifies why many traditional rectifying devices usually are based on thyristors, for instance, a B6C configuration. Such a rectifying device is preferable due to its efficiency and its reliability. However, a thyristor-based rectifying device is not suited to control sufficiently a value of the reactive current on the AC side, for instance, if capacitive reactive current was required. The situation may become even more serious when considering a trend that most of the countries of the world are replacing existing conventional power plants by renewable energy sources which further decreases a strength and stability of the electric power network. Therefore, power converters based on operation in a self-commutation modus, especially, transistor-based power converters, are more and more applied for the purpose of energy supply for an electrolyzing plant.

In this regard, it is an object of the invention to provide a method, an apparatus, as well as an electrolyzing plant which may further support a reliable operation of the electrolyzing devices, especially, their electrolyzing cells. Especially, influence of the electric power supply on aging or integrity of the electrolyzing devices, especially, their electrolyzing cells, shall be reduced.

As a solution, a method, a control apparatus, and an electrolyzing plant according to the independent claims are proposed.

Exemplary embodiments can be further derived from the features of the dependent claims.

With regard to a generic method, it is proposed that the method may include that a value of a phase difference between at least two of the clock frequencies of the at least two power converters is controlled to conform to a predetermined reference value.

With regard to a generic apparatus, it is proposed that the control apparatus may be configured to control a value of a phase difference between at least two of the clock frequencies of the at least two power converters in order to conform to a predetermined reference value.

With regard to a generic electrolyzing plant, it is proposed that the control apparatus conforms to the control apparatus of the invention.

The invention considers the idea that it could be possible to reduce the ripple value of the voltage ripple or the current ripple, respectively, when at least two power converters are used, wherein their DC sides are connected in parallel, when their clock frequencies are controlled such that their commutation events controlled by their individual clock frequencies are shifted against each other that the commutation events of the different are substantially not at the same time. Especially, the commutation events are shifted such in time that the respective single ripple values caused by each of the power converters allow at least partially compensation of the individual ripple values which may result in a reduction of an over all ripple value. If the power converters operate at a substantial same clock frequency, a respective phase shift between the clock frequencies of the at least two power converters may be provided. Insofar, the invention proposes a process that is much more effective than, for example, a great inductive component or a passive filter design which, in turn, would be very expensive and heavy because of the high power to be handled. If two power converters are provided only in an exemplary embodiment, the value of the predetermined reference value may be, for instance, about 180°. If three power converters are provided only in an exemplary embodiment, the predetermined reference value may be, for instance, about 120°, and so on. The predetermined reference value may correspond to a respective instant of time.

Especially, the present invention aims at the DC side quality aspects provided by the power supply in order to enable a smooth operation with limited degradation impact over the electrolyzing membranes of the electrolyzing cells and hence increase the lifetime of the electrolyzing device. The DC power quality aspect may be considered as a main topic in terms of electrolyzing membrane lifetime and membrane ageing. This applies especially to Proton Exchange Membranes (PEM) based electrolyzing cells inside the electrolyzing device, especially, when the electrolyzing device is at least partially formed by stacks of the electrolyzing cells. The stack may give the nature and the mechanical dimensions of the membrane. The quality of the DC power acting on the electrolyzing cell by the voltage ripple or current ripple, respectively, may cause ageing mechanisms degrading it over the time. In this situation, the power supply may consider such aspect and may deliver an improved quality of the DC power in order to cope with the degradation aspects.

The reference value can be experimentally determined by measuring, for instance, aging of the electrolyzing cells during application of different ripple values. The determination of the reference value may also consider costs connected with smoothing the ripple value or the like. Moreover, the invention may also allow reducing the clock frequencies of the power converters, when, for instance, a specific level of the value of the ripple voltage can be accepted.

In this regard, conforming to the reference value means especially that the ripple value may usually be smaller than the reference value. The ripple value may be smaller than the reference value all the time. However, in some embodiments, where the electrolyzing device is operated at a power smaller than a rated power, the ripple value may be somewhat larger than the reference value for a predefined limited time range. For this purpose, a tolerance band may be derived from the reference value, wherein the ripple value may not exceed the tolerance band.

The invention is not limited to the use of two power converts only. There may be provided three or more power converters which DC sides are connected in parallel and which are operated according to the invention. Especially, if more than two power converters are provided, a specific individual time slot can be provided as the predetermined reference value for each of the power converters for commutation. The time slots can correspond to a specific phasing of the respective clock frequencies of the respective power converters. In a preferred embodiment, the time slots for commutation of the different power converters or the phasings of their different clock frequencies, respectively, are equidistant.

The power converters may be connected with the same AC power source. The AC sides of the power converters may be connected with the AC power source via a transformer. However, each of the at least two power converters may be connected with separate AC power source. In a preferred embodiment, the AC sides of the at least two power converters may be electrically insulated from each other.

Moreover, if the clock frequencies of the at least two power converters deviate or differ from each other, the control apparatus may determine a respective time slot for each commutation event for each of the at least two power converters in order to allow controlling the current phase difference between the clock frequencies to conform to the reference value.

Especially, the at least two power converters may be controlled such that they provide substantially the same power. Additionally or in the alternative, the power control may also dependent on contribution of the specific power converter to the ripple value. Besides others, the contribution may be at least partially dependent on a design of the specific power converter. Without limitation, it is preferred that the at least two power converters have substantially the same design.

The control apparatus may comprise an electric hardware circuitry in order to provide the required functionality. Moreover, the control apparatus may also comprise a programmable computer being configured to provide at least partially the required functionality. Also, a combination of a hardware circuitry and a programmable computer may be provided. The control apparatus may be in communication with the at least two power converters. Especially, the control apparatus may provide at least one control signal for at least one of the at least two power converters which enables the respective power converter to adjust the phasing of its clock frequency dependent on the at least one control signal. In an exemplary embodiment, the control apparatus provides control signals for all of the at least two power converters. Moreover, it may be possible that the at least two power converters provide phase signal to the control apparatus indicating the current phasing of the clock frequency. Also, it may be provided in an embodiment that the control apparatus is in communication with at least a voltage sensor detecting the DC voltage, namely, the electrolyzing voltage, of the DC side or a current sensor detecting an electric current of the DC side, namely, the electrolyzing current.

The programmable computer or a computing unit, respectively, may in particular be understood as a data processing device, which comprises processing circuitry. The computing unit can therefore in particular process data to perform computing operations. This may also include operations to perform indexed accesses to a data structure, for example a look-up table (LUT).

In particular, the computing unit may include one or more computers, one or more microcontrollers, and/or one or more integrated circuits, for example, one or more applicationspecific integrated circuits, ASIC, one or more field-programmable gate arrays, FPGA, and/or one or more systems on a chip, SoC. The computing unit may also include one or more processors, for example one or more microprocessors, one or more central processing units, CPU, one or more graphics processing units, GPU, and/or one or more signal processors, in particular one or more digital signal processors, DSP. The computing unit may also include a physical or a virtual cluster of computers or other of said units.

In various embodiments, the computing unit includes one or more hardware and/or software interfaces and/or one or more memory units.

A memory unit may be implemented as a volatile data memory, for example a dynamic random access memory, DRAM, or a static random access memory, SRAM, or as a non-volatile data memory, for example a read-only memory, ROM, a programmable read-only memory, PROM, an erasable programmable read-only memory, EPROM, an electrically erasable programmable read-only memory, EEPROM, a flash memory or flash EEPROM, a ferroelectric random access memory, FRAM, a magnetoresistive random access memory, MRAM, or a phase-change random access memory, PCRAM.

According to another exemplary embodiment, it is proposed that at least one of the electrolyzing voltage and the electrolyzing current is detected, a ripple value of the electrolyzing voltage and/or the electrolyzing current is determined, the ripple value is compared with the predetermined reference value, and the phase difference is adjusted depending on the comparison. This embodiment allows monitoring the quality of the energy supply of the DC side and using the invention to maintain the quality during operation of the electrolyzing plant. Moreover, comparison may further consider the current power that is provided by each of the at least two power converters.

In a further exemplary embodiment, it is proposed that one of the clock frequencies of the at least two power converters is used as reference frequency. Any phase difference can be based of this reference frequency. This embodiment is especially advantageous if more than two power converters are used. For each power converter, a specific phase shift can be provided. The individual ripple values of the individual power converters can be superimposed so that reduction of the overall ripple can be enhanced. An easy control of the power converters with regard to ripple value reduction can be achieved.

According to yet exemplary another embodiment, it is proposed that the reference value is determined dependent on the number of the power converters. This embodiment considers that the number of the power converters may affect the possibility of reduction for the ripple value that may be achieved. The higher the number of the power converters, the higher may be the reduction that can be achieved by the inventive concept.

According to another exemplary embodiment, it is proposed that the reference value is determined dependent on values of a respective rated power of the at least two power converters. This embodiment may consider that a high power of a specific power converter may contribute respectively high to the ripple value. The value of the phase difference may be controlled such that, for instance, a high contribution to the ripple value of one of the power converters may be compensated by suitable contributions of other power converters. In this regard, time slots for the commutation of the power converters may not be equidistant, for example.

According to yet another exemplary another embodiment, it is proposed that, based on the predetermined reference value, an individual phase slot is allocated to any of the at least two power converters, wherein the phase slot controls a phasing of the respective clock frequency. The phase slot can be determined by the control apparatus dependent on a current power of the electrolyzing plant, a current power of the at least two power converters, and/or the like. The phase slot may be based on the clock frequency and may correspond to a specific time slot for a specific one of the at least two power converters.

According to an exemplary another embodiment, it is proposed that the at least two power converters use the same clock frequency. This allows providing a substantial constant phase shift or phase difference, respectively, between the clock frequencies of the at least two power converters. An expense for establishing the inventive process can be reduced.

With regard to the electrolyzing plant, it is proposed in an exemplary embodiment that the AC sides of the at least two power converters are electrically coupled with the at least one AC power source via at least one transformer, wherein the AC side of a respective one of the at least two power converters is connected with an individual secondary winding of the at least one transformer. This structure allows electrically insulating of the AC sides of the power converters. This avoids that circulating currents may appear, as the DC sides of the at least two power converters are connected in parallel.

The method can be provided by the control apparatus. The control apparatus can be a separate component of the electrolyzing plant. However, it can be at least partially included by a control device of the electrolyzing plant.

For use cases or use situations which may appear in a method according to the invention and which are not explicitly described herein, it may be provided that, in accordance with the method, an error message and/or a prompt for user feedback is output and/or a default setting and/or a predetermined initial state is set. Especially, in applications or situations which might be possible but which are not specified specifically, it may be provided that a failure signal and/or a request for inputting a user confirmation can be output and/or a standard configuration and/or a predefined initial status can be suspended.

Independent of the grammatical term usage, individuals with male, female or other gender identities are included within the term.

The teaching of the present invention can be readily understood and at least some additional specific details will appear by considering the following detailed description of some exemplary embodiments in conjunction with the accompanying drawings. In the drawings, same reference characters correspond to same components and functions. In the drawings, it is shown:
FIG 1 a schematic block diagram showing an energy supply for an electrolyzing plant having an electrolyzing device;
FIG 2 a schematic diagram showing a DC voltage of a DC side of plural power converters being superimposed by a ripple voltage, wherein the ripple voltages caused by the plural power converters are in phase;
FIG 3 a schematic diagram as FIG 2 showing the DC voltages of the DC sides of the plural power converters, wherein the plural ripple voltages of the power converters are phase shifted against each other;
FIG 4 a schematic diagram as FIG 3 showing the DC voltage of the DC sides of the plural power converters, wherein the ripple voltages of the power converters are phase shifted against each other and are superimposed; and
FIG 5 a schematic block diagram as FIG 1 showing a second embodiment for an energy supply for the electrolyzing plant, wherein the power converters are transistor-based.

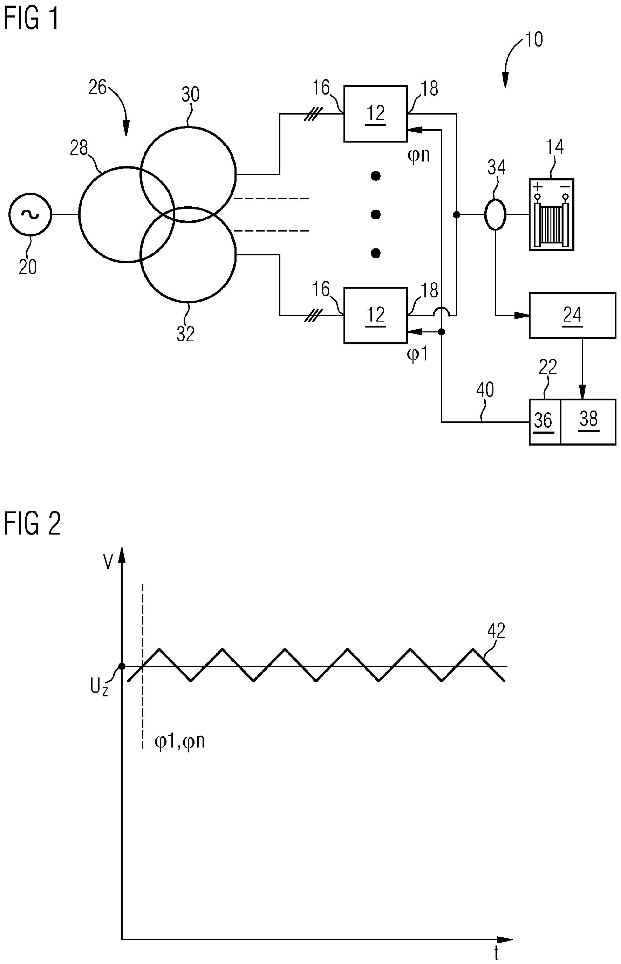

FIG 1 shows a schematic block diagram showing a first embodiment of an energy supply for an electrolyzing plant 10 having an electrolyzing device 14. In alternative embodiments, more than only one electrolyzing device 14 may be provided. If more than one electrolyzing device 14 was provided, they could be connected with each other at least partially in parallel or in series.

The electrolyzing plant 10 additionally has plural power converters 12, wherein only two of the power converters are shown in FIG 1. Each of the power converters 12 has an AC side 16 and a DC side 18. The AC sides 16 of the power converters 12 are configured to be connected with a power source 20, which is in the present embodiment a public power grid providing a threephase AC voltage at a frequency of about 50 Hz. The DC sides 18 of all of the power converters 12 are connected in parallel with each other and are additionally connected with the electrolyzing device 14, in order to supply the electrolyzing device 14 with electric energy such that the electrolyzing device 14 is subjected to an electrolyzing voltage and an electrolyzing current. Each of the power converters 12 operates in self-commutation, wherein the commutation of each of the power converters 12 depends on an individual clock frequency of each of the power converters 12. The electrolyzing plant 10 further comprises a control apparatus 22, which is communicatively connected with the power converters 12.

Moreover, the electrolyzing plant 10 comprises a transformer 26, which has a primary winding 28, which is configured to be connected with the AC power source 20. For each of the power converters 12, the transformer 26 has a separate secondary winding, wherein in FIG 1 only two secondary windings 30, 32 are shown.

Moreover, the electrolyzing plant 10 has a control device 24, which can be formed as a control station for controlling the operation of the electrolyzing plant 10, especially, the operation of the electrolyzing device 14. The control device 24 is in communication with the control apparatus 22.

The control apparatus 22 has a communication apparatus 36, which is configured to communicate with the power converters 12. For this purpose, the control apparatus 22 is configured to submit a control signal 40 to the power converters 12 containing respective control data. The power converters 12 may use the control data for adjusting their operation correspondingly.

In further exemplary embodiments, the communication apparatus 36 may be configured to receive individual signals from each of the power converters 12 related to operating statuses or the like. Especially, the power converters 12 may submit data related to a current power, a current clock frequency, a current phasing of the clock frequency and/or the like.

The control apparatus 22 further comprises a control section 38, which is configured to gather data related to an operation of the power converters 12 and to determine the control signal 40 for controlling the operation of the power converters 12. The control section 38 is further in communication with the control device 24.

The control device 24 is further connected with a voltage sensor 34 detecting an electrolyzing voltage Uz. In the present embodiment, the control apparatus 22 receives respective sensor data from the voltage sensor 34 via the control device 24.

The control apparatus 22, especially, the control section 38, is configured to determine and to control a value of a phase difference between the clock frequencies of the power converters 12, in order to conform to a predetermined reference value as further detailed below.

FIG 2 shows a schematic diagram, wherein an abscissa is allocated to the time, and an ordinate is allocated to a relative voltage. The character U_{Z} indicates a DC voltage which is necessary to supply the electrolyzing device 14 with electric energy during the determined electrolyzing process for electrolyzing of water. The voltage U_{Z} is substantially constant.

Moreover, a graph 42 shows an electrolyzing voltage provided by the power converters 12. In this embodiment, the clock frequencies of the power converters 12 are in phase so that their respective commutation appear at the same time. As can be seen from Fig. 2, the voltage according to graph 42 comprises a voltage ripple, which is substantially caused by commutation of the power converters 12. The voltage ripple appears also at the electrolyzing device 14 so that electrolyzing cells of the electrolyzing device 14 are subjected to the voltage ripple, too.

It has been found that the voltage ripple affects aging and/or integrity of the electrolyzing cells which is why the voltage ripple is undesired. On the other side, a generic design concept of the power converters 12 does not allow avoiding completely the voltage ripple. It may be possible to reduce the voltage ripple on the power-converter-site, but this would cause high costs and further expense in design considering the power that is usually necessary for operating the electrolyzing cells in the electrolyzing modus.

Therefore, it is proposed to operate the more than only one power converters 12 in a specific way as shown in FIG 1. The control apparatus 22 provides respective control of the power converters 12, which allows reducing the voltage ripple overall that is provided to the electrolyzing device 14.

As can be seen from FIG 2, the voltage ripple depends on a clock frequency, which controls commutation caused by switching elements of the power converters 12. The clock frequency of each of the power converters 12 has a specific phasing, which can be allocated to specific instants of time. In the embodiment according to FIG 2, all clock frequencies of all power converters 12 are in phase that means that they have the same frequency and the same phasing. Therefore, the ripple voltage in FIG 2 is respectively high. Correspondingly, the phasings indicated in FIG 2 with Φ1, Φn are the same so that a difference in the phasings is substantially zero.

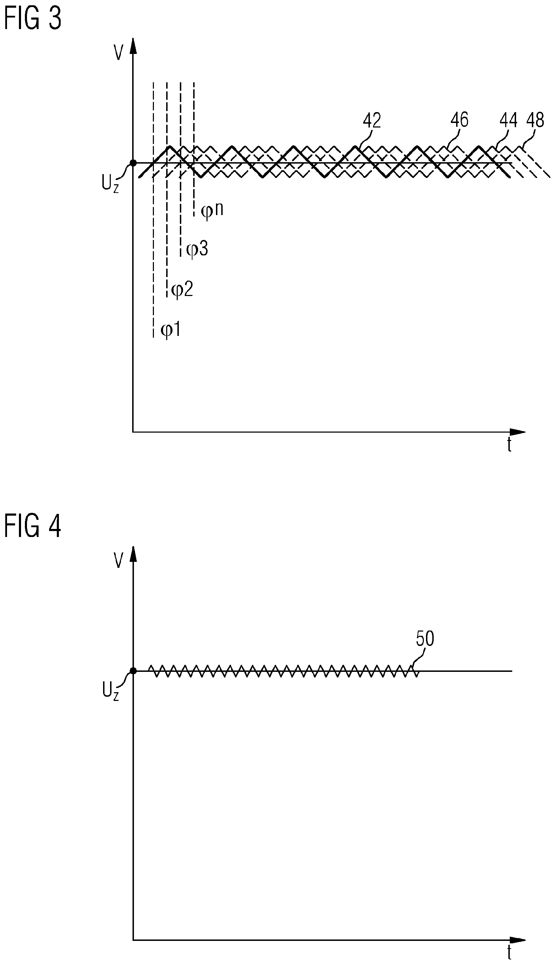

FIGs 3 and 4 show a control concept for controlling the power converters 12 in a different way, in order to reduce the ripple voltage as shown by FIG 2. FIG 3 shows a schematic diagram such as FIG 2 showing the DC voltages of the DC sides 18 of the plural power converters 12, wherein the plural ripple voltages of the power converters 12 are phase shifted against each other. As already discussed, the phasings of the individual ripple voltages caused by the power converters 12 depend on their individual clock frequency.

Therefore, the difference in the phasings caused by clock frequencies of the different power converters 12 results in a corresponding phase difference of the ripple voltages. This is shown in FIG 3 showing exemplarily a phase difference between the ripple voltages or the clock frequencies, respectively, of four power converters 12. The embodiment according to FIG 3 is based on four power converters 12. The control section 38 detects that four power converters 12 are connected with the control apparatus 22 and determines a predetermined reference value to be 90°.

Hence, as the power converters 12 operate at substantially the same clock frequency, a phase shift or phase difference of about 90° is provided so that the respective ripple voltages of the parked vehicles 12 are also shifted against each other by 90° or a respective instant of time. This is shown by graphs 42, 44, 46, 48, wherein a respective one of the graphs 42, 44, 46, 48 is allocated to a specific individual ripple voltage caused by a respective one of the four power converters 12. Correspondingly, respective angles Φ1, Φ2, Φ3, Φn can be allocated.

The control apparatus 22 controls the power converters 12 via the control signal 40 such that the phase difference between the clock frequencies of the power converters 12 conforms to the value of about 90° being the predetermined reference value. The individual ripple voltages according to the graphs 42 through 48 are superimposed resulting in the electrolyzing voltage, which is shown in a schematic diagram according to FIG 4. FIG 4 shows a schematic diagram such as FIG 3 showing the DC voltage of the DC sides 18 of the plural power converters 12, wherein the ripple voltages of the power converters 12 are phase shifted against each other with respect to FIG 3 and are then superimposed. A graph 50 shows the result of superimposing.

As can be seen from FIG 4 according to graph 50, an amplitude of the ripple voltage can be substantially reduced. This is the result of phase shifting according to the invention. Therefore, with only little effort, it is possible to reduce the value of the ripple voltage substantially so that, in turn, affecting of integrity of the electrolyzing cells of the electrolyzing device 14 can be reduced, too. This inventive concept further allows that values of the clock frequencies of the power converters 12 can be reduced, too without substantially increasing the ripple voltage. In this regard, switching losses caused by commutation in the power converters 12 can be reduced, too.

Therefore, the invention generally allows achieving at least two advantages, namely reducing the value of the ripple voltage and/or reducing of the value of the frequency of the clock frequencies of the power converters 12. A further benefit can also be achieved on the AC side 16 of the power converters 12, wherein values of an AC current and an AC voltage may be improved in order to result in an improved AC power quality and THD content.

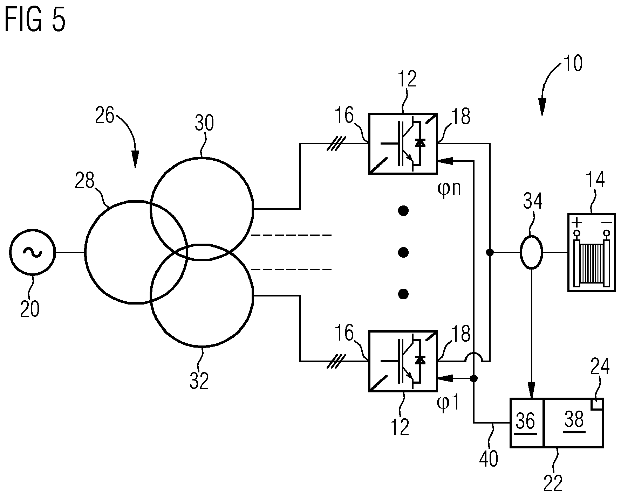

In this regard, FIG 5 shows a schematic block diagram such as FIG 1 showing a second embodiment of an energy supply for the electrolyzing plant 10, wherein all of the power converters 12 are transistor-based. In the present embodiment, insulation-gate-bipolar-transistors (IGBTs) are used as switching elements for the power converters 12. Moreover, in this embodiment, the control device 24 is integral with the control apparatus 22. The inventive concept can be applied to all parallel-operated transistor-based power converters 12 or can also be applied to clusters of transistor-based power converters based on the capability of each power converter 12 to regulate the parallel operation. In cases, where this may not be possible, a phase shifting for respective clusters can be provided which shall be synchronized during operation.

According to yet a further embodiment, it is proposed that the control apparatus 22 monitors the value of the ripple voltage provided for the electrolyzing device 14 as well as individual DC currents of the power converters 12 and, automatically adjust the phase shift among the power converters 12 based on the predefined reference value or mathematical equations, respectively. In this regard, a hysteresis may be provided in order to avoid unwanted instable operation of the control apparatus 22, especially oscillations.

The detailled embodiments as discussed above shall only be regarded to further detail the invention and not be used to limit the scope of the invention.

## Claims

1. A method of controlling at least two power converters (12), wherein each of the at least two power converters (12) operates in self-commutation and has a DC side (18) and an AC side (16), wherein the AC sides (18) of the at least two power converters (12) are connected with at least one AC power source (20), wherein the DC sides (16) of the at least two power converters (12) are connected in parallel with each other and are connected with at least one electrolyzing device (14), in order to supply the electrolyzing device (14) with electric energy such that the electrolyzing device (14) is subjected to an electrolyzing voltage (U_{Z}) and an electrolyzing current, wherein each of the at least two power converters (12) are operated at a respective clock frequency, wherein commutation of each of the at least two power converters (12) depends on the clock frequency of the respective one of the at least two power converters (12), **characterized in that**
a value of a phase difference between at least two of the clock frequencies of the at least two power converters (12) is controlled to conform to a predetermined reference value.

2. The method according to claim 1, **characterized in that** at least one of the electrolyzing voltage (U_{Z}) and the electrolyzing current is detected, a ripple value of the electrolyzing voltage (Uz) and/or the electrolyzing current is determined, the ripple value is compared with the predetermined reference value, and the phase difference is adjusted depending on the comparison.

3. The method according to claim 2, **characterized in that** one of the clock frequencies of the at least two power converters (12) is used as a reference frequency.

4. The method according to anyone of the preceding claims, **characterized in that** the reference value is determined dependent on the number of the power converters (12).

5. The method according to anyone of the preceding claims, **characterized in that** the reference value is determined dependent on values of a respective rated power of the at least two power converters (12).

6. The method according to anyone of the preceding claims, **characterized in that**, based on the predetermined reference value, an individual phase slot is allocated to any of the at least two power converters (12), wherein the phase slot controls a phasing of the respective clock frequency.

7. The method according to anyone of the preceding claims, **characterized in that** the at least two power converters (12) use the same clock frequency.

8. A control apparatus (22) for controlling at least two power converters (12), wherein each of the at least two power converters (12) is configured to operate in self-commutation and has a DC side (18) and an AC side (16), wherein the AC sides (16) of the at least two power converters (12) are configured to be connected with at least one AC power source (20), wherein the DC sides (18) of the at least two power converters (12) are connected in parallel with each other and are connected with at least one electrolyzing device (14), in order to supply the at least one electrolyzing device (14) with electric energy such that the at least one electrolyzing device (14) is subjected to an electrolyzing voltage (U_{Z}) and an electrolyzing current, wherein each of the at least two power converters (12) is configured to operate at a respective clock frequency, wherein commutation of each of the at least two power converters (12) depends on the clock frequency of the respective one of the at least two power converters (12), the control apparatus (22) comprising:
- a communication apparatus (36) configured to communicate with the at least two power converters (12),
- a control section (38) configured to gather data related to an operation of the at least two power converters (12) and to determine at least one control signal (40) for controlling the operation of the at least two power converters (12), wherein the control apparatus (22) is configured to submit the at least one control signal (40) to the at least two power converters (12),
**characterized in that**
the control apparatus (22) is configured to control a value of a phase difference between at least two of the clock frequencies of the at least two power converters (12) in order to conform to a predetermined reference value.

9. An electrolyzing plant (10) having:
- at least one electrolyzing device (14),
- at least two power converters (12), wherein each of the at least two power converters (12) is configured to operate in self-commutation and has a DC side (18) and an AC side (16), wherein the AC sides (16) of the at least two power converters (12) are configured to be connected with at least one AC power source (20), wherein the DC sides (18) of the at least two power converters (12) are connected in parallel with each other and are connected with the at least one electrolyzing device (14), in order to supply the at least one electrolyzing device (14) with electric energy such that the at least one electrolyzing device (14) is subjected to an electrolyzing voltage (U_{Z}) and an electrolyzing current, wherein each of the at least two power converters (12) configured to operate at a respective clock frequency, wherein commutation of each of the at least two power converters (12) depends on the clock frequency of the respective one of the at least two power converters (12), and
- a control apparatus (22) which is communicatively connected with the at least two power converters (12),
**characterized in that**
the control apparatus corresponds to the control apparatus according to claim 8.

10. The electrolyzing plant according to claim 9, **characterized in that** the AC sides (16) of the at least two power converters (12) are electrically coupled with the at least one AC power source (20) via at least one transformer (26), wherein the AC side (16) of a respective one of the at least two power converters (12) is connected with an individual secondary winding (30, 32) of the at least one transformer (26).
